(19) Europäisches Patentamt
European Patent Office
Office européen des brevets

(11) **EP 0 530 486 B1**

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(51) Int Cl.[6]: **C08L 23/14**, C08L 53/00, C08F 297/08
// C08J9/14,(C08L23/14, 53:00),
(C08L53/00, 23:14)

(21) Anmeldenummer: **92112671.0**

(22) Anmeldetag: **24.07.1992**

(54) **Schaumstoffe auf Basis eines Impact-Copolymeren**

Foams based on an impact-copolymer

Mousses à base d'un copolymère impact

(84) Benannte Vertragsstaaten:
**BE DE ES FR GB IT NL**

(30) Priorität: **09.08.1991 DE 4126358**

(43) Veröffentlichungstag der Anmeldung:
**10.03.1993 Patentblatt 1993/10**

(73) Patentinhaber: **BASF Aktiengesellschaft**
**D-67063 Ludwigshafen (DE)**

(72) Erfinder:
• **deGrave, Isidoor, Dr.**
**W-6706 Wachenheim (DE)**
• **Fischer, Joachim, Dr.**
**W-6716 Dirmstein (DE)**
• **Graalmann, Onno, Dr.**
**W-6915 Dossenheim (DE)**

(56) Entgegenhaltungen:
**EP-A- 0 159 384        EP-A- 0 442 316**
**US-A- 4 740 529**

• **DATABASE WPIL Derwent Publications Ltd., London, GB; AN 84228101(37)**
• **DATABASE WPIL Derwent Publications Ltd., London, GB; AN 86221890(34)**

# EP 0 530 486 B1

**Beschreibung**

Die Erfindung betrifft neuartige Schaumstoffe auf Basis eines Impact-Copolymeren. Die Erfindung betrifft insbesondere solche Schaumstoffe, die aus einer Kautschukphase aus einem Propylen-Ethylen-Blockcopolymeren und einer thermoplastischen Phase aus einem statistischen Copolymeren aus Propylen und Ethylen oder Propylen und Buten-(1) bestehen.

Schaumstoffe auf Basis von Polyolefinen und Olefincopolymeren sind aufgrund ihrer Temperaturbeständigkeit und guten stoßdämpfenden Eigenschaften von großem technischen Interesse. Ihre Herstellung erfolgt in bekannter Weise durch Imprägnieren des Polymeren mit einem flüchtigen Treibmittel bei erhöhter Temperatur unter Druck und Entspannen des Gemisches. Man arbeitet entweder nach dem Extrusionsverfahren oder vorteilhaft nach dem Suspensions-Imprägnierverfahren. Bei letzterem geht man von Polymerpartikeln aus, die in wäßriger Suspension mit dem Treibmittel imprägniert und anschließend zu Schaumstoffpartikeln aufgeschäumt werden. Durch Verschweißen der Schaumstoffpartikel können Formkörper beliebiger Gestalt hergestellt werden.

Die bisher bekannten Schaumstoffe auf Basis von Olefin(co)polymeren weisen jedoch eine Reihe von Nachteilen auf. Sie zeigen entweder eine hohe Zug-, Druck- und Biegefestigkeit bei unbefriedigender Bruchdehnung oder eine hohe Bruchdehnung bei unbefriedigender Zug-, Druck- und Biegefestigkeit.

Außerdem kommt es bei der Herstellung der eingesetzten Granulate aufgrund starker Scherbeanspruchungen während des Extrusionsvorgangs zu Abbauprozessen. Dies ist insbesondere für die Recyclisierung der Schaumstoffe von Nachteil, bei der jeweils erneut aufgeschmolzen werden muß.

Aus der DE-A 35 39 352 (US-A 4 626 555) sind im wesentlichen Polypropylenharzschaumteilchen mit einer Schüttdichte von 8 bis 100 g/l und einem Teilchendurchmesser von 1 bis 5 mm bekannt, wobei das Polypropylenharz 5 bis 30 Gew.-% eines bei Raumtemperatur in Xylol löslichen Stoffes mit einem Ethylengehalt von 20 bis 80 Gew.-% und 70 bis 95 Gew.-% eines bei Raumtemperatur in Xylol unlöslichen Stoffes mit einem Hauptschmelztemperaturpeak von 130 bis 158°C umfaßt.

Das Polypropylenharz kann eine Mischung aus einem Ethylen-Propylen-Randomcopolymer und einem Ethylen-Propylen-Gummi sein.

Der Erfindung lag die Aufgabe zugrunde, Schaumstoffe zu entwickeln, die bei verbesserter Recyclierbarkeit sowohl eine hohe Zug-, Biege- und Druckfestigkeit als auch eine hohe Bruchdehnung aufweisen. Die Schaumstoffe sollen außerdem über eine hohe Abriebfestigkeit und gute Kaltschlagzähigkeit verfügen.

Es wurde nun überraschenderweise gefunden, daß Schaumstoffe auf Basis von bestimmten Impact-Copolymeren, die aus einer Kautschukphase aus einem Propylen-Ethylen-Blockcopolymeren und einer thermoplastischen Phase aus einem statistischen Copolymeren aus Propylen und Ethylen oder Propylen und Buten-(1) bestehen, sämtliche gewünschten Eigenschaften aufweisen.

Gegenstand der vorliegenden Erfindung sind somit unvernetzte Schaumstoffe der Dichte 0,01 bis 0,2 g/cm$^3$ mit einer Zellzahl von 2 bis 1000 Zellen/mm$^2$ auf Basis eines Impact-Copolymeren, bestehend aus

a) 1 bis 55 Gew.-% eines Blockcopolymerisats aus

a$_1$) 35 bis 65 Gew.-% Ethylen und

a$_2$) 35 bis 65 Gew.-% Propylen, sowie

b) 45 bis 99 Gew.-% eines statistischen Copolymerisats aus

b$_1$) 0,5 bis 6 Gew.-% Ethylen und 94 bis 99,5 Gew.-% Propylen, oder aus

b$_2$) 0,5 bis 12 Gew.-% Buten-(1) und 88 bis 99,5 Gew.-% Propylen.

Grundbestandteil der erfindungsgemäßen Schaumstoffe sind Impact-Copolymere aus 1 bis 55 Gew.-%, vorzugsweise 1 bis 50 Gew.-%, insbesondere 2 bis 50 Gew.-% eines Blockcopolymerisats a) aus 35 bis 65 Gew.-% Ethylen und 35 bis 65 Gew.-% Propylen, sowie 45 bis 99 Gew.-%, vorzugsweise 50 bis 99 Gew.-%, insbesondere 50 bis 98 Gew.-% eines statistischen Copolymerisats b) aus 0,5 bis 6 Gew.-%, vorzugsweise 1 bis 6 Gew.-%, insbesondere 1 bis 4 Gew.-% Ethylen und 94 bis 99,5 Gew.-%, vorzugsweise 94 bis 99 Gew.-%, insbesondere 96 bis 99 Gew.-% Propylen oder aus 0,5 bis 12 Gew.-%, vorzugsweise 1 bis 12 Gew.-%, insbesondere 1 bis 10 Gew.-% Buten (1) und 88 bis 99,5 Gew.-%, vorzugsweise 88 bis 99 Gew.-%, insbesondere 90 bis 99 Gew.-% Propylen. Die Impact-Copolymeren haben einen E-Modul von 50 bis 1500, vorzugsweise 100 bis 1400, insbesondere 100 bis 1350 N/mm$^2$.

Die Herstellung des Block-Copolymerisats a) sowie des statistischen Copolymerisats b) erfolgt in bekannter Weise durch Copolymerisation der Monomeren mittels Übergangsmetallkatalysatoren.

Die Impact-Copolymerisate können daraus durch Mischen von Blockcopolymerisat a) und statistischem Copolymerisat b) in der Schmelze im Extruder hergestellt werden (sogenannte Extruderblends).

Vorzugsweise erfolgt die Herstellung der Impact-Copolymerisate in einer Kaskade aus zwei Reaktoren (sogenannte Reaktorblends). Im ersten Reaktor wird zunächst das statistische Copolymerisat b) und im zweiten Reaktor das Blockcopolymerisat a) durch Copolymerisation der Monomere mittels Übergangsmetallkatalysatoren hergestellt.

Besonders bevorzugte Impact-Copolymerisate werden durch zweistufige Polymerisation aus der Gasphase heraus in einem bewegten Festbett mittels eines Ziegler-Natta-Katalysatorsystems, das neben einer titanhaltigen Feststoffkomponente noch eine Aluminiumverbindung enthält, gemäß der Europäischen Patentanmeldung Nr. 91 101 110.4 erhalten.

Aufgrund der guten Phasendispergierung (d.h. der guten Mischung von Blockcopolymerisat a) und statistischem Copolymerisat b) im 2. Reaktor) können die Impact-Copolymerisate anschließend unter schonenden Bedingungen extrudiert werden. Der negative Effekt von starken Scherbeanspruchungen während des Extrusionsvorganges wird dadurch verringert. Die verminderte thermische Schädigung der Polymermatrix im Extruder wirkt sich zudem positiv auf die Recyclierbarkeit der Produkte aus.

Die Impact-Copolymeren sind im allgemeinen linear aufgebaut und unvernetzt. Der Kristallitschmelzpunkt, bestimmt nach der DSC-Methode, liegt im allgemeinen zwischen 125 und 165, insbesondere zwischen 135 und 165°C. Die Schmelzwärme, bestimmt nach der DSC-Metho-de, liegt im allgemeinen zwischen 30 und 110 J/g, vorzugsweise zwischen 40 und 100 J/g. Vorzugsweise werden Impact-Copolymere mit einem Schmelzindex MFI (230; 2,16) (nach DIN 53 735) von 0,1 bis 15, insbesondere 0,5 bis 12 [g/10 min] verwendet.

Das Molekulargewicht ($\overline{M}_w$) der Impact-Copolymeren darf zur Vermeidung von vermehrter Agglomeratbildung während der Imprägnierung nicht zu niedrig sein. Andererseits wirken sich zu hohe Molekulargewichte ungünstig auf die Granulatherstellung und die Verarbeitungseigenschaften der Schaumpartikel aus.

Die Blockcopolymerisate a) haben im allgemeinen gewichtsmittlere Molekulargewichte $\overline{M}_w$ von 50.000 bis 500.000, vorzugsweise von 100.000 bis 500.000 und besonders bevorzugt von 150.000 bis 450.000.

Die statistischen Copolymerisate b) haben im allgemeinen gewichtsmittlere Molekulargewichte $\overline{M}_w$ von 100.000 bis 600.000, vorzugsweise von 150.000 bis 500.000 und besonders bevorzugt von 200.000 bis 500.000.

Die in den erfindungsgemäßen Impact-Copolymerisaten vorliegenden Blockcopolymerisate a) und statistischen Copolymerisate b) weisen sehr unterschiedliche Löslichkeiten in Xylol auf.

Das Blockcopolymerisat a) ist zu 70 bis 98, vorzugsweise zu 80 bis 98 und besonders bevorzugt zu 90 bis 98 Gew.-% in Xylol bei 25°C löslich.

Das statistische Copolymerisat b) ist zu weniger als 10, vorzugsweise zu weniger als 5 Gew.-% in Xylol bei 25°C löslich.

Der Schaumstoff kann daneben übliche Zusatzstoffe in wirksamen Mengen enthalten, wie Farbstoffe, Pigmente, Keimbildner, Stabilisatoren, Flammschutzmittel, Synergisten, Gleitmittel und Antistatika.

Die erfindungsgemäßen Schaumstoffe haben eine Dichte von 0,01 bis 0,2 g/cm³, vorzugsweise 0,01 bis 0,18 g/cm³, insbesondere 0,02 bis 0,1 g/cm³. Sie sind überwiegend geschlossenzellig mit einer Zellzahl von 2 bis 1000, vorzugsweise 5 bis 800, insbesondere 10 bis 500 Zellen/mm².

Die Herstellung der erfindungsgemäßen Schaumstoffe erfolgt in an sich bekannter Weise durch Vermischen des Copolymeren mit einem flüchtigen Treibmittel und gegebenenfalls den Zusatzstoffen und anschließendes Verschäumen. Beispielsweise werden die Komponenten in einem Extruder vermischt und das Gemisch anschließend durch eine Düse extrudiert, wobei es aufschäumt. Auf diese Weise können kontinuierlich Folien, Stränge und Platten hergestellt werden.

Geeignete Treibmittel sind niedrig siedende Halogenkohlenwasserstoffe, anorganische Gase und vorzugsweise aliphatische Kohlenwasserstoffe mit 3 bis 5 C-Atomen, wie Propan, n-Butan, Isobutan, n-Pentan, Isopentan und/oder Neopentan. Auch Gemische der genannten Treibmittel können verwendet werden.

Vorzugsweise erfolgt die Herstellung der erfindungsgemäßen Schaumstoffe in an sich bekannter Weise nach dem Suspensions-Imprägnier-Verfahren. Das Copolymere wird dazu zweckmäßig in Form von Partikeln mit einem mittleren Durchmesser von 0,5 bis 5 mm, vorzugsweise 0,6 bis 4 mm in wäßriger Suspension mit 0,1 bis 0,4, vorzugsweise 0,15 bis 0,3 kg pro kg des Copolymeren, eines Treibmittels bei einer etwa 5°C bis 20°C unter dem Kristallitschmelzpunkt (DSC-Maximum) des Polymeren liegenden Temperatur unter Druck imprägniert und anschließend unter Aufschäumen entspannt.

Die erhaltenen Schaumstoffpartikel weisen im allgemeinen einen mittleren Durchmesser zwischen 1 und 20 mm und eine Schüttdichte von etwa 5 bis 100 g/l, vorzugsweise 10 bis 90 g/l auf.

Insbesondere bei niedrigen Schüttdichten diffundiert das Treibmittel häufig aus den Zellen schneller heraus als Umgebungsluft hineindiffundiert. Die Partikel können daher zum Teil auf bis zu 40 % ihres ursprünglichen Volumens schrumpfen. Sie nehmen ihre ursprüngliche Gestalt wieder an, wenn sie bei Raumtemperatur oder einer erhöhten Temperatur, maximal 20°C unterhalb des Kristallitschmelzpunktes des Impact-Copolymeren, mit Luft oder Stickstoff unter einem Überdruck von 0,5 bis 10 bar eine ausreichende Zeit, im allgemeinen 5 bis 500 Minuten, behandelt werden. Die Schaumstoffpartikel können nach bekannten Verfahren durch Erhitzen in porösen oder nicht gasdicht schließenden Formen zu beliebigen Formkörpern verschweißt werden.

Die erfindungsgemäßen Schaumstoffe haben im allgemeinen eine Zugfestigkeit von 0,1 bis 4,0 N/mm$^2$, eine Grenzbiegespannung von 0,05 bis 4,5 N/mm$^2$, eine Druckspannung bei 50 % Stauchung von 0,10 bis 4,0 N/mm$^2$ und eine Bruchdehnung von 2 bis 60 %.

Die erfindungsgemäßen Schaumstoffe verfügen außerdem über eine hohe Abriebfestigkeit und gute Kaltschlagzähigkeit.

Beispiele

Die in den Beispielen genannten Teile sind Gewichtsteile.

Die Bestimmung der Zugfestigkeit und der Bruchdehnung erfolgte nach DIN 53 571 (Verfahren II, Probekörper B), der Druckspannung bei 50 % Stauchung nach DIN 53 577, der Grenzbiegespannung nach DIN 53 423 und des E-Moduls nach DIN 53 457. Die Bestimmung des Kristallitschmelzpunkts erfolgte durch Erhitzen einer Probemenge von 10 mg mit einer Aufheizgeschwindigkeit von 20°C/min auf 200°C, Abkühlen der Probe mit einer Kühlrate von 20°C/min auf Raumtemperatur und erneutes Erhitzen mit einer Heizrate von 20°C/min über den Schmelzbereich hinaus. Der Kristallitschmelzpunkt wurde als Spitze des Temperaturpeaks im DSC-Diagramm der zweiten Aufheizperiode bestimmt.

Beispiel 1

In einem Druckgefäß wurden 100 Teile eines entsprechend der Europäischen Patentanmeldung Nr. 91 101 110.4 hergestellten Impact-Copolymeren aus 86 Gew.-% eines statistischen Ethylen-Propylen-Copolymeren mit einem Ethylengehalt von 2,3 Gew.-% und 14 Gew.-% eines Ethylen-Propylen-Blockcopolymerisats mit einem Ethylengehalt von 50 Gew.-% (Meltindex 230; 2,16 = 3,2 g/10 min; DSC-Maximum 148°C, E-Modul 720 N/mm$^2$), 24 Teile n/i-Butan (60:40), 228 Teile Wasser, 6,8 Teile Tricalciumphosphat und 0,14 Teile Natriumdodecylbenzolsulfonat als Dispergierhilfsmittel unter Rühren innerhalb von 64 Minuten auf 130,5°C erhitzt und anschließend, während der Druck im Kessel durch Nachpressen von Stickstoff auf 30 bar konstant gehalten wurde, durch ein Bodenventil ausgetragen und entspannt. Es wurden Schaumstoffpartikel der Schüttdichte 18,5 g/l erhalten.

Die Partikel wurden nach der Trocknung pneumatisch in eine vorgeheizte Formkammer eingefüllt und die Form 12 Sekunden mit Dampf von 135°C beheizt. Anschließend wurde entspannt, mit Wasser gekühlt, die Form geöffnet und das Formteil entnommen. Die Dichte des Formkörpers betrug 35 g/l. Der Formkörper zeigte eine hervorragende Verschweißung, eine Zugfestigkeit von 0,44 N/mm$^2$, eine Grenzbiegespannung von 0,41 N/mm$^2$, eine Druckspannung (50 % Stauchung) von 0,24 N/mm$^2$ und eine Bruchdehnung von 24 %.

Beispiele 2 bis 6

Es wurde wie in Beispiel 1 gearbeitet, jedoch unter Verwendung von Impact-Copolymeren mit der in der Tabelle aufgeführten Zusammensetzung, sowie unterschiedlichen Mengen an Treibmitteln und Dispergierhilfsmitteln sowie unterschiedlichen Imprägniertemperaturen und Imprägnierzeiten. Die Ergebnisse sind in der Tabelle zusammengefaßt.

Vergleichsbeispiele 7 bis 10

Es wurde wie in den Beispielen 1 bis 6 gearbeitet, jedoch unter ausschließlicher Verwendung von statistischen Copolymeren mit der in der Tabelle angeführten Zusammensetzung und unter den in der Tabelle angegebenen Bedingungen. Die Ergebnisse sind in der Tabelle zusammengefaßt.

Tabelle

| Beispiel | Polymerisat-Zusammensetzung | | | | | DSC-Max. | MFI (230; 2,16) | E-Modul |
|---|---|---|---|---|---|---|---|---|
| | Statistisches Copolymerisat | | | Blockcopolymerisat | | | | |
| | C2 | C3 | C4 | C2/C3 | Gewichts-anteil | | | |
| | [Gew.-%] | [Gew.-%] | [Gew.-%] | | [Gew.-%) | [°C] | [g/10 min] | [N/mm$^2$] |
| 1 | 2,3 | 97,7 | – | 50/50 | 14 | 148 | 3,2 | 720 |
| 2 | 2,3 | 97,7 | – | 50/50 | 33 | 146 | 1,6 | 320 |
| 3 | 2,3 | 97,7 | – | 50/50 | 19 | 148 | 2,6 | 600 |
| 4 | 3,3 | 96,7 | – | 50/50 | 18 | 140 | 2,8 | 400 |
| 5 | – | 89,6 | 10,4 | 50/50 | 13 | 145 | 2,8 | 650 |
| 6 | – | 94,7 | 5,3 | 50/50 | 13 | 151 | 3,0 | 910 |
| 7 (Vgl.) | 2,3 | 97,7 | – | – | – | 151 | 8 | 1050 |
| 8 (Vgl.) | 2,3 | 97,7 | – | – | – | 151 | 8 | 1050 |
| 9 (Vgl.) | 4,1 | 94,5 | 1,4 | – | – | 133 | 5 | 520 |
| 10 (Vgl.) | 4,1 | 94,5 | 1,4 | – | – | 133 | 5 | 520 |

Tabelle (Fortsetzung)

| Beispiel | Versuchsbedingungen beim Imprägnieren | | | Imprägniertemperatur | Imprägnierzeit |
|---|---|---|---|---|---|
| | n/i-Butan | Tricalciumphosphat | Na-dodecylbenzol-sulfonat | | |
| | [Teile] | [Teile] | [Teile] | [°C] | [min] |
| 1 | 24 | 6,8 | 0,14 | 130,5 | 64 |
| 2 | 24 | 6,8 | 0,14 | 131,0 | 64 |
| 3 | 20 | 3,4 | 0,02 | 132,0 | 64 |
| 4 | 24 | 6,8 | 0,14 | 123,5 | 62 |
| 5 | 24 | 6,8 | 0,14 | 130,5 | 64 |
| 6 | 20 | 3,4 | 0,02 | 136,2 | 65 |
| 7 (Vgl.) | 24 | 6,8 | 0,14 | 135,8 | 65 |
| 8 (Vgl.) | 20 | 3,4 | 0,02 | 135,8 | 65 |
| 9 (Vgl.) | 24 | 6,8 | 0,14 | 118,0 | 60 |
| 10 (Vgl.) | 20 | 3,4 | 0,02 | 117,5 | 60 |

EP 0 530 486 B1

Tabelle (Fortsetzung)

| Beispiel | Schüttdichte [g/l] | Formteildichte [g/l] | Zugfestigkeit [N/mm$^2$] | Druckspannung (50 % Stauchung) [N/mm$^2$] | Grenzbiege-spannung [N/mm$^2$] | Bruchdehnung [%] |
|---|---|---|---|---|---|---|
| 1 | 18,5 | 35 | 0,44 | 0,24 | 0,41 | 24 |
| 2 | 17 | 30 | 0,26 | 0,14 | 0,14 | 42 |
| 3 | 32 | 60 | 0,73 | 0,43 | 0,65 | 22 |
| 4 | 18 | 30 | 0,34 | 0,16 | 0,17 | 36 |
| 5 | 17,5 | 30 | 0,38 | 0,20 | 0,23 | 22 |
| 6 | 31,4 | 60 | 0,82 | 0,57 | 0,74 | 18 |
| 7 (Vgl.) | 16 | 22 | 0,27 | 0,17 | 0,23 | 14 |
| 8 (Vgl.) | 33 | 55 | 0,75 | 0,50 | 0,83 | 11 |
| 9 (Vgl.) | 15 | 20 | 0,22 | 0,14 | 0,15 | 30 |
| 10 (Vgl.) | 33 | 60 | 0,73 | 0,40 | 0,68 | 20 |

**Patentansprüche**

1. Unvernetzte Schaumstoffe der Dichte 0,01 bis 0,2 g/cm$^3$ mit einer Zellzahl von 2 bis 1000 Zellen/mm$^2$ auf Basis eines Impact-Copolymeren sowie gegebenenfalls Farbstoffen, Pigmenten, Keimbildnern, Stabilisatoren, Flammschutzmittel, Synergisten, Gleitmittel und Antistatika, dadurch gekennzeichnet, daß das Impact-Copolymere aus

   a) 1 bis 55 Gew.-% eines Blockcopolymerisats aus

   a$_1$) 35 bis 65 Gew.-% Ethylen und

   a$_2$) 35 bis 65 Gew.-% Propylen sowie

   b) 45 bis 99 Gew.-% eines statistischen Copolymerisats aus

   b$_1$) 0,5 bis 6 Gew.-% Ethylen und 94 bis 99,5 Gew.-% Propylen, oder aus

   b$_2$) 0,5 bis 12 Gew.-% Buten- (1) und 88 bis 99,5 Gew.-% Propylen

   besteht.

2. Schaumstoffe nach Anspruch 1, dadurch gekennzeichnet, daß das statistische Copolymerisat b) aus

   b$_1$) 0,5 bis 6 Gew.-% Ethylen und 94 bis 99,5 Gew.-% Propylen

   besteht.

3. Schaumstoffe nach Anspruch 1, dadurch gekennzeichnet, daß das statistische Copolymerisat b) aus

   b$_2$) 0,5 bis 12 Gew.-% Buten-(1) und 88 bis 99,5 Gew.-% Propylen

   besteht.

4. Schaumstoffe nach einem der Ansprüche 1 bis 3, dadurch gekennzeichnet, daß die Impact-Copolymerisate durch zweistufige Polymerisation aus der Gasphase heraus in einem bewegten Festbett mittels eines Ziegler-Natta-Katalysatorsystems, das neben einer titanhaltigen Feststoffkomponente noch eine Aluminiumverbindung enthält, hergestellt wurden.

5. Schaumstoffe nach einem der Ansprüche 1 bis 4, dadurch gekennzeichnet, daß die Blockcopolymerisate a) ein gewichtsmittleres Molekulargewicht von 50.000 bis 500.000 und die statistischen Copolymerisate b) ein gewichtsmittleres Molekulargewicht von 100.000 bis 600.000 haben.

6. Schaumstoffe nach einem der Ansprüche 1 bis 5, dadurch gekennzeichnet, daß die Blockcopolymerisate a) und die statistischen Copolymerisate b) linear aufgebaut sind.

7. Verfahren zur Herstellung von Schaumstoffen der Dichte 0,01 bis 0,2 g/cm$^3$ mit einer Zellzahl von 2 bis 1000 Zel-len/mm$^2$ auf Basis eines Impact-Copolymeren, dadurch gekennzeichnet, daß die Impact-Copolymeren aus

   a) 1 bis 55 Gew.-% eines Blockcopolymerisats aus

   a$_1$) 35 bis 65 Gew.-% Ethylen und

   a$_2$) 35 bis 65 Gew.-% Propylen, sowie

   b) 45 bis 99 Gew.-% eines statistischen Copolymerisats aus

   b$_1$) 0,5 bis 6 Gew.-% Ethylen und 94 bis 99,5 Gew.-% Propylen, oder aus

b$_2$) 0,5 bis 12 Gew.-% Buten-(1) und 88 bis 99,5 Gew.-% Propylen

durch zweistufige Polymerisation aus der Gasphase heraus in einem bewegten Festbett mittels eines Ziegler-Natta-Katalysatorsystems, das neben einer titanhaltigen Feststoffkomponente noch eine Aluminiumverbindung enthält, hergestellt werden.

## Claims

1. An uncrosslinked foam having a density of from 0.01 to 0.2 g/cm$^3$ and a cell count of from 2 to 1,000 cells/mm$^2$ and based on an impact copolymer and, if appropriate, dyes, pigments, nucleating agents, stabilizers, flameproofing agents, synergistic agents, lubricants and antistatic agents, wherein the impact copolymer consists of

   a) from 1 to 55% by weight of a block copolymer of

   a$_1$) from 35 to 65% by weight of ethylene and
   a$_2$) from 35 to 65% by weight of propylene and

   b) from 45 to 99% by weight of a random copolymer of

   b$_1$) from 0.5 to 6% by weight of ethylene and from 94 to 99.5% by weight of propylene, or of
   b$_2$) from 0.5 to 12% by weight of but-1-ene and from 88 to 99.5% by weight of propylene.

2. A foam as claimed in claim 1, wherein the random copolymer b) consists of

   b$_1$) from 0.5 to 6% by weight of ethylene and from 94 to 99.5% by weight of propylene.

3. A foam as claimed in claim 1, wherein the random copolymer b) consists of

   b$_2$) from 0.5 to 12% by weight of but-1-ene and from 88 to 99.5% by weight of propylene.

4. A foam as claimed in claim 1 or 2 or 3, wherein the impact copolymer was prepared by two-stage polymerization from the gas phase in an agitated fixed bed by means of a Ziegler-Natta catalyst system which contains an aluminum compound in addition to a titanium-containing solid component.

5. A foam as claimed in claim 1 or 2 or 3 or 4, wherein the block copolymer a) has a weight average molecular weight of from 50,000 to 500,000 and the random copolymer b) has a weight average molecular weight of from 100,000 to 600,000.

6. A foam as claimed in claim 1 or 2 or 3 or 4 or 5, wherein the block copolymer a) and the random copolymer b) are linear.

7. A process for the preparation of a foam having a density of from 0.01 to 0.2 g/cm$^3$ and a cell count of from 2 to 1,000 cells/mm$^2$ and based on an impact copolymer, wherein the impact copolymer is prepared from

   a) from 1 to 55% by weight of a block copolymer of

   a$_1$) from 35 to 65% by weight of ethylene and
   a$_2$) from 35 to 65% by weight of propylene and

   b) from 45 to 99% by weight of a random copolymer of

   b$_1$) from 0.5 to 6% by weight of ethylene and from 94 to 99.5% by weight of propylene, or of
   b$_2$) from 0.5 to 12% by weight of but-1-ene and from 88 to 99.5% by weight of propylene

   by two-stage polymerization from the gas phase in an agitated fixed bed by means of a Ziegler-Natta catalyst system which contains an aluminum compound in addition to a titanium-containing solid component.

**Revendications**

1.  Substances alvéolaires non réticulées, de masse volumique comprise entre 0,01 et 0,2 g/cm$^3$, avec un nombre de cellule compris entre 2 et 1000 cellules/mm$^2$, à base d'un copolymère à impact, ainsi que, le cas échéant, de colorants, pigments, formateurs de germes, stabilisateurs, agents de protection contre la flamme, synergistes, lubrifiants et antistatiques, caractérisées en ce que le copolymère à impact est composé de

    a) de 1 à 55 % en poids d'un copolymérisat en blocs, composé de

    $a_1$) de 35 à 65 % en poids d'éthylène et
    $a_2$) de 35 à 65 % en poids de propylène, ainsi que

    b) de 45 à 99 % en poids d'un copolymérisat statistique, composé de

    $b_1$) 0,5 à 6 % en poids d'éthylène, et 94 à 99,5 % en poids de propylène, ou de
    $b_2$) 0,5 à 12 % en poids de butène (1), et 88 à 99,5 % en poids de polypropylène.

2.  Substances alvéolaires selon la revendication 1, caractérisées en ce que le copolymérisat statistique b) est constitué de

    $b_l$) 0,5 à 6 % en poids d'éthylène et 94 à 99,5 % en poids de propylène.

3.  Substances alvéolaires selon la revendication 1, caractérisées en ce que le copolymérisat statistique b) est constitué de

    $b_2$) 0,5 à 12 % en poids de butène (1) et 88 à 99,5 % en poids de propylène.

4.  Substances alvéolaires selon l'une des revendications 1 à3, caractérisées en ce que les copolymérisats à impact ont été fabriqués par polymérisation en deux étapes à partir de la phase gazeuse, en un lit solide mis en mouvement, au moyen d'un système de catalyseur Ziegler-Natta contenant, outre un composant solide contenant du titane, encore une combinaison aluminium.

5.  Substances alvéolaires selon la revendication 1 à 4, caractérisées en ce que les copolymérisats en blocs a) ont un poids moléculaire moyen de 50.000 à 500.000 et les copolymérisats statistiques b) ont un poids moléculaire moyen de 100.000 à 600.000.

6.  Substances alvéolaires selon l'une des revendications 1 à5, caractérisées en ce que les copolymérisats en blocs a) et les copolymérisats statistiques b) sont de structures linéaires.

7.  Procédé de fabrication de substances alvéolaires de masses volumiques 0,01 à 0,2 g/cm$^3$, avec un nombre de cellules de 2 à 1000 cellules/mm$^2$ sur la base d'un copolymère à impact, caractérisé en ce que les copolymères à impact sont constitués de

    a) 1 à 55 % en poids d'un copolymérisat à bloc constitué de

    $a_1$) de 35 à 65 % en poids d'éthylène, et
    $a_2$) de 35 à 65 % en poids de propylène, ainsi que

    b) de 45 à 99 % en poids d'un copolymérisat statistique, composé de

    $b_1$) 0,5 à 6 % en poids d'éthylène, et 94 à 99,5 % en poids de propylène, ou de
    $b_2$) 0,5 à 12 % en poids de butène (1), et 88 à 99,5 % en poids de polypropylène,

    par une polymérisation en deux étapes à partir de la phase gazeuse, dans un lit solide mis en mouvement, au moyen d'un système à catalyseur Ziegler-Natta, contenant, outre un composant solide contenant du titane, encore un composé d'aluminium.